# EUROPÄISCHE PATENTSCHRIFT

(11) **EP 1 177 609 B1**
(45) Veröffentlichungstag und Bekanntmachung des Hinweises auf die Patenterteilung: **13.06.2012**
(21) Anmeldenummer: 01913661.3
(22) Anmeldetag: 16.02.2001
(51) Int. Cl.: H02K 11/00, H02K 3/28, H02H 7/08, B62D 5/04, B60R 16/02

(54) **FAIL-SAFE FÜR BÜRSTENLOSE GLEICHSTROMANTRIEBE**
FAIL-SAFE MECHANISM FOR DC-DRIVE
SECURITE INTEGREE POUR SYSTEME D'ENTRAINEMENT A COURANT CONTINU SANS BALAIS

(30) Priorität: 01.03.2000 DE 10009781; 03.01.2001 DE 10100159
(43) Veröffentlichungstag der Anmeldung: 06.02.2002
(73) Patentinhaber: ROBERT BOSCH GMBH, 70442 Stuttgart (DE)
(72) Erfinder: WITZIG, Harald, 77830 Buehlertal (DE)
(86) Internationale Anmeldenummer: PCT/DE2001/000592
(87) Internationale Veröffentlichungsnummer: WO 2001/065666

(56) Entgegenhaltungen:
- EP-A- 0 508 250
- WO-A-98/10971
- DE-A- 4 209 167
- DE-A- 4 406 730
- GB-A- 743 765
- US-A- 4 833 387
- PATENT ABSTRACTS OF JAPAN vol. 017, no. 630 (E-1463), 22. November 1993 (1993-11-22) -& JP 05 199712 A (SHIBAURA ENG WORKS CO LTD), 6. August 1993 (1993-08-06)
- PATENT ABSTRACTS OF JAPAN vol. 1998, no. 08, 30. Juni 1998 (1998-06-30) -& JP 10 075596 A (JIDOSHA KIKI CO LTD), 17. März 1998 (1998-03-17)

## Beschreibung

### Stand der Technik

Die Erfindung geht aus von einem bürstenlosen Gleichstromantrieb nach dem Oberbegriff des PatenLanspruchs 1.

In Kraftfahrzeugen werden permanenterregte, bürstenlose Gleichstromantriebe zu vielfältigen Zwecke, darunter auch für elektrische Servolenkungen, verwendet. Diese Gleichstromantriebe weisen einen Synchronmotor mit einer vorzugsweise in Stern geschalteten Stator- oder Ankerwicklung und einem permanenterregten Rotor auf. Die Ankerwicklung ist über einen Umrichter in Brückenschaltung mit sechs Halbleiter- Leistungsschaltern an das Gleichspannungsnetz angeschlossen. Der die Kommutierung der Ankerwicklung bewirkende Wechselrichter wird von einem elektronischen Steuergerät angesteuert. Ein Beispiel für einen an einem Gleichspannungsnetz betriebenen Synchronmotor ist in der DE 37 09 168 Al beschrieben.

Treten in der Ankerwicklung und/oder in den Leistungsschaltern Fehler auf, so kann der Gleichstromantrieb ein dauerhaftes elektromagnetisches Bremsmoment erzeugen, ohne daß eine Gleichspannung angelegt ist, da nunmehr der Synchronmotor als Generator gegen einen niederohmigen Lastwiderstand arbeitet. In vielen Anwendungsfällen beeinträchtigt ein solches Bremsmoment die Funktion des Aggregats oder Systems, in dem der Gleichstromantrieb eingesetzt ist. So erzwingt z. B. bei elektrischen Servolenkungen das im Fehlerfall auftretende Bremsmoment erhebliche, vom Fahrer aufzubringende Lenkkräfte, die nicht akzeptiert werden können. Es ist daher bekannt, an solchen Gleichstromantrieben Einrichtungen vorzusehen, die im Fehlerfall zu einem sog. Fail-Silent-Verhalten des Gleichstromantriebs führen, d. h., daß der Gleichstromantrieb keinen störenden oder nachteiligen Einfluß auf das Aggregat oder des System ausübt, dieses also so arbeitet, als ob der Antrieb nicht vorhanden wäre.

Bei einer bekannten elektrischen Servolenkung wird zur Erzeugung des angestrebten Fail-Silent-Verhaltens eine mechanische Kupplung verwendet, über die die Abtriebswelle des Synchronmotors in das Lenkgetriebe eingreift. Im Fehlerfall wird die Kupplung geöffnet und somit der Motor vom Lenksystem abgekoppelt.

< Aus der WO 98/10971 A ist darüber hinaus bekannt, in einem Elektromotor für einen Lenkungsantrieb, bei dem die Wicklungsphasen einer Ankerwicklung miteinander in einer Sternschaltung verbunden sind, ein beispielsweise als Relais ausgebildetes Schaltmittel am Sternpunkt der Wicklungsphasen derart einzusetzen, dass es die Verbindungen von zwei der drei Wicklungsphasen im Fehlerfall unterbrechen kann.

Eine weitere Möglichkeit zur Unterbrechung der Verbindungen der in einer Stern- oder Dreieckschaltung angeordneten Wicklungsphasen einer Ankerwicklung eines Elektromotors geht aus der GB 743 765 A hervor. Ein röhrenartiges, flüssigkeitsgefülltes Schutzmittel ist dabei derart um die Ankerwicklung herum angeordnet, dass es bei einer Überhitzung der Wicklungsphasen zu einer Verdampfung der Flüssigkeit kommt, wobei der sich räumlich ausdehnenden Dampf auf ein Schaltmittel wirkt, das seinerseits eine Stromversorgung der Wicklungsphasen am Sternpunkt der Sternschaltung bzw. an den Kontaktpunkten der Dreieckschaltung unterbricht.

Die JP 05 199712 A zeigt eine Möglichkeit zur Unterbrechung der Stromversorgung für einen Elektromotor mittels einer Schmelzsicherung, die infolge eines überhöhten Motorstroms und der daraus resultierenden Überhitzung ausgelöst wird.

Die DE 44 06 730 A1 offenbart, dass zur Unterbrechung der Stromversorgung eines Kraftfahrzeugs zwischen einer Kraftfahrzeugbatterie und einem Bordnetz ein Schaltmittel vorgesehen ist, dass bei einem Unfall durch eine pyrotechnische Einrichtung gezündet wird. Dabei ist ein Schaltstück des Schaltmittels derart durch eine Feder in Schließstellung belastet, dass es die Stromversorgung sicherstellt, während es bei einem Unfall durch eine mit der pyrotechnischen Einrichtung in einer Wirkverbindung stehenden Kolbenstange in eine Offenstellung verbracht und durch eine Sperrklinke oder eine andere Arretiereinrichtung gehalten wird. Somit kann das Schaltmittel nach Freigabe der Arretierung wieder in die Schließstellung zurückgeführt werden. >

### Vorteile der Erfindung

Der erfindungsgemäße bürstenlose Gleichstromantrieb mit den Merkmalen des Patentanspruchs 1 hat den Vorteil, dass die Sicherstellung eines gewünschten Fail-Silent-Verhaltens gegenüber den im Stand der Technik bekannten Lösungen verbessert wird. Dazu weist eine den Fehlerfall erkennende Steuereinheit in jeder Verbindungsleitung zwischen der als Brückenschaltung mit Halbleiterschaltern ausgebildeten Schaltvorrichtung und der Ankerwicklung angeordnete Messshunts auf. In gleichzeitigen Sperrphasen aller Halbleiterschalter werden die über die Messshunts fließenden Ströme gemessen, und bei Auftreten eines signifikant von Null abweichenden Stromwerts in einem der Messshunts gibt die Steuervorrichtung ein Aktivierungssignal an die Trennmittel aus. Eine solche Ausbildung der Steuereinheit, mit der in der Schaltvorrichtung auftretende Fehler erkannt werden, hat zudem den Vorteil, dass die bereits aus anderen Gründen zur Strommessung in dem Gleichstromantrieb vorhandenen Messshunts zur Erkennung des Fehlerfalls herangezogen werden können, wodurch sich der Schaltungsaufwand weiter reduziert. Fehler in der Ankerwicklung selbst können z.B. durch Messen des an der Abtriebswelle des Sychronmotors abgegebenen Bremsmoments erfasst werden, was bei elektrischen Servolenkungen von Vorteil ist, da in den Stellgliedern der elektrischen Lenkvorrichtungen bereits Sensoren zur Messung der an den Eingangs- und Ausgangswellen auftretenden Drehmomente vorhanden sind.

Durch die in den weiteren Ansprüchen aufgeführten Maßnahmen sind vorteilhafte Weiterbildungen und Verbesserungen des im Patentanspruch 1 angegebenen Gleichstromantriebs möglich.

Gemäß einer vorteilhaften Ausführungsform der Erfindung weist bei einer Sternschaltung der Ankerwicklung die Steuereinheit Meßshunts auf, die jeweils eine Wicklungsphase der Ankerwicklung mit dem Sternpunkt verbinden. Die Steuereinheit mißt fortlaufend die über die Meßshunts fließenden Ströme nach Betrag und Phase und addiert die Shuntströme vektoriell. Bei einem signifikanten Abweichen des Additionsergebnisses von Null gibt die Steuereinheit ein Aktivierungssignal an die Trennmittel. Mit einer solchen Steuereinheit werden sowohl Fehler in der Halbleiter-Schaltvorrichtung als auch Fehler in der Ankerwicklung erkannt und entsprechend die Trennmittel aktiviert.

Gemäß vorteilhafter Ausführungsformen der Erfindung können die Trennmittel so ausgebildet sein, daß sie eine irreversible oder reversible Auftrennung der Verbindungen zwischen den Wicklungsphase der Ankerwicklung bewirken. Eine irreversible Auftrennung kann mittels pyrotechnischer Sprengladungen oder mittels Schmelzsicherungen herbeigeführt werden. Für die reversible Auftrennung werden elektrische Kontakte verwendet, die elektronisch oder mechanisch steuerbar sind. Bei Ankerwicklungen in Sternschaltung wird der Sternpunkt aufgetrennt, bei Ankerwicklungen in Dreieckschaltung muß jede Wicklungsphase von den Wicklungsanschlüssen abgetrennt werden.

### Zeichnung

Die Erfindung ist anhand von in der Zeichnung dargestellten Ausführungsbeispielen in der nachfolgenden Beschreibung näher erläutert. Es zeigen:
- Fig. 1: ein Schaltbild eines bürstenlosen Gleichstromantriebs,
- Fig. 2: ein Schaltbild einer modifizierten Ankerwicklung für den Gleichstromantrieb in Figur 1,
- Fig. 3: ein Schaltbild der Ankerwicklung des Gleichstromantriebs in Fig. 1 mit modifizierter Steuereinheit zum Ansteuern von Trennmitteln zum Auftrennen der Ankerwicklung,
- Fig. 4 und 5: jeweils eine gleiche Darstellung wie in Fig. 2 gemäß zweier weiterer Ausführungsbeispiele.

### Beschreibung der Ausführungsbeispiele

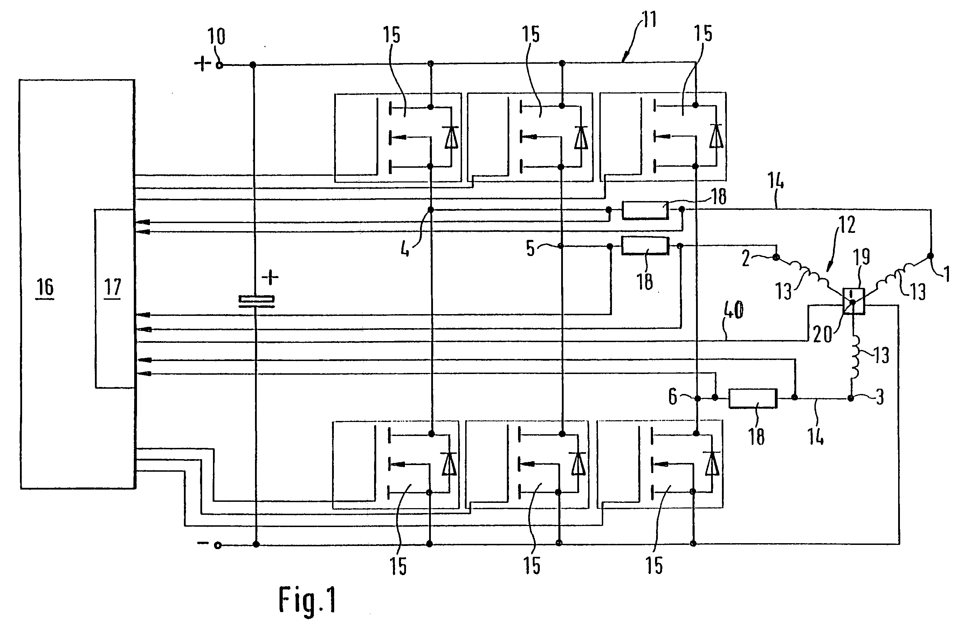

Der in Fig. 1 im Prinzipschaltbild dargestellte bürstenlose Gleichstromantrieb weist einen Synchronmotor auf, der mittels einer Schaltvorrichtung 11 zum elektronischen Kommutieren an einer Gleichspannungsquelle 10 betrieben wird. Der hier nur mit seiner Stator- oder Ankerwicklung 12 dargestellte Synchronmotor weist in bekannter Weise einen die Ankerwicklung 12 aufnehmenden Stator oder Ständer und einen im Stator drehenden Rotor oder Läufer mit Permanentmagnetpolen auf. Die dreiphasig ausgeführte Ankerwicklung 12 weist im Ausführungsbeispiel der Fig. 1 drei in Stern geschaltete Wicklungsphasen 13 auf, deren Anschlüsse 1, 2 und 3 über Verbindungsleitung 14 mit der Schaltvorrichtung 11 verbunden sind.

Die als B6-Wechselrichter ausgeführte Schaltvorrichtung 11 weist sechs Halbleiterschalter 15, vorzugsweise MOS-FETS, auf, die in Brückenschaltung angeordnet sind. Die zu den Wicklungsanschlüssen 1,2 und 3 führenden Verbindungsleitungen 14 sind dabei jeweils an dem Abgriff 4, 5 und 6 eines jeweils durch Reihenschaltung zweier Halbleiterschalter 15 gebildeten Brückenzweigs angeschlossen, der in der Verbindung der beiden Halbleiterschalter 15 liegt. Zum Kommutieren der Ankerwicklung 12, d. h. zum zeitlich richtigen Anlegen der Wicklungsphasen 13 an die Gleichspannungsquelle 10, sind die Halbleiterschalter 15 von einem elektronischen Steuergerät 16 ansteuerbar.

Der bürstenlose Gleichstromantrieb verfügt über eine Einrichtung zum Erzwingen eines sog. Fail-Silent-Verhaltens, die sicherstellt, daß bei Auftreten eines Fehlers im Gleichstromantrieb, der z. B. von einem defekten Halbleiterschalter 15 oder einem Wicklungsschluß in der Ankerwicklung 12 verursacht sein kann, das mit dem Gleichstromantrieb zusammenwirkende System nicht nachteilig beeinflußt oder gestört wird. Diese Einrichtung umfaßt Trennmittel, die im Fehlerfall die Verbindungen zwischen den Wicklungsphasen 13 auftrennen sowie eine im Steuergerät 16 integrierte Steuereinheit 17, die einerseits den Fehlerfall erfaßt und andererseits die Trennmittel bei Auftreten des Fehlerfalls aktiviert. Im Ausführungsbeispiel der Fig. 1 gehören zu der Steuereinheit 17 drei Meßshunts, von denen jeweils einer in die drei Verbinäungsleitungen 14 zwischen Schaltvorrichtung 11 und Ankerwicklung 12 eingeschaltet ist.

In Zeitintervallen, in denen alle Halbleiterschalter 15 gesperrt sind, mißt die Steuereinheit 17 die über die Meßshunts 18 fließenden Shuntströme. Sind alle Halbleiterschalter 15 intakt, so ist jeder Shuntstrom Null. Mißt die Steuereinheit 17 in einem der Meßshunts 18 einen signifikant von Null abweichenden Wert, so erzeugt sie ein Aktivierungssignal, das an die Trennmittel gegeben wird und diese aktiviert.

Im Ausführungsbeispiel der Fig. 1 greifen die Trennmittel im Sternpunkt 20 der Ankerwicklung 12 an und bewirken bei ihrem Aktivieren ein irreversibles Auftrennen der Sternpunktverbindung der Wicklungsphasen 13. Die Trennmittel sind hier beispielsweise als eine pyrotechnische Sprengkapsel 19 ausgebildet, wie sie z. B. bei Kraftfahrzeugen zur Auslösung der Airbags im Crashfall verwendet wird. Die elektrisch zündbare Sprengkapsel 19 ist seinerseits über eine Verbindungsleitung 40 mit der Steuereinheit 17 und andererseits mit dem Minuspotential der Geichspannungsquelle 10 verbunden. Liefert einer der Meßshunts 18 einen signifikant von Null abweichenden Stromwert, so erzeugt die Steuereinheit 17 einen elektrischen Zündimpuls, der die Sprengkapsel 19 zündet. Die explodierende Sprengladung reißt den Sternpunkt 20 auf und die Wicklungsphasen 13 sind voneinander getrennt. Dadurch kann der systemimmanente Gleichstromantrieb, der von dem System im Fehlerfall über seine Abtriebswelle angetrieben wird, kein Bremsmoment erzeugen, da die aufgetrennte Ankerwicklung 12 keinen Generatorbetrieb zuläßt.

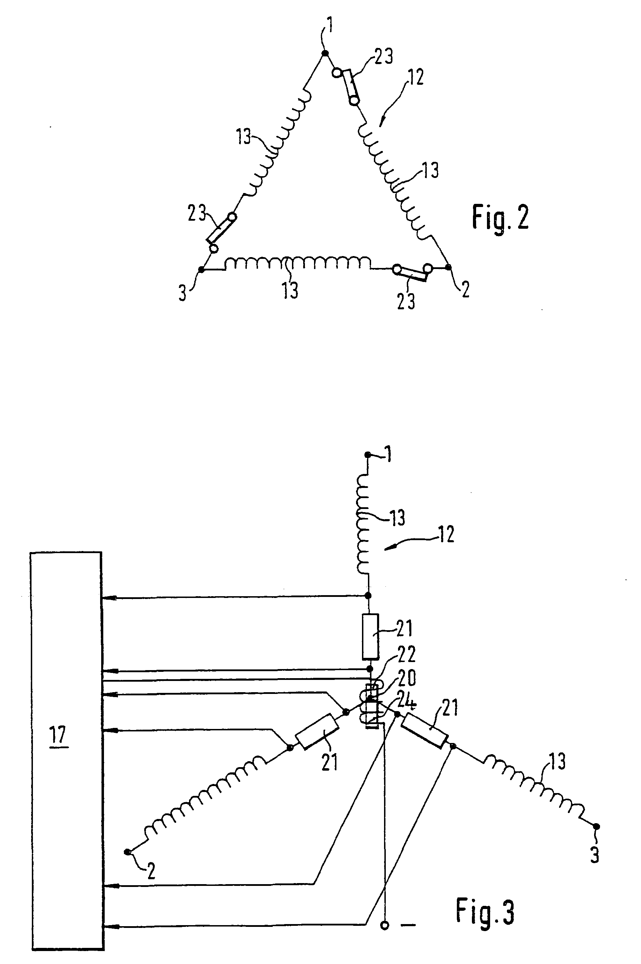

Mit der zu Fig. 1 beschriebenen Steuereinheit 17 können nur solche Fehler erkannt werden, die auf Defekte in den Halbleiterschaltern 15 beruhen. Um auch in der Ankerwicklung 12 auftretende Fehlermöglichkeiten zu erfassen, ist gemäß Fig. 3 die Steuereinheit 17 dahingehend modifiziert, daß die in den Zuleitungen 14 vorhandenen Meßshunts 18 entfallen und statt dessen Meßshunts 21 zwischen dem Sternpunkt 20 und jeder Wicklungsphase 13 angeordnet sind. Die Steuereinheit 17 mißt die über die Meßshunts 21 fließenden Ströme nach Betrag und Phase und addiert diese vektoriell. Bei fehlerfreiem Gleichstrommotor ergibt das Additionsergebnis stets Null. Weicht die Vektorsumme signifikant von Null ab, erzeugt die Steuereinheit 17 wiederum ein Aktivierungssignal für die hier ebenfalls am Sternpunkt 20 angreifenden Trennmittel. Im Ausführungsbeispiel der Fig. 3 weisen die Trennmittel eine Schmelzsicherung 22 auf, die bei Aktivierung durch die Steuereinheit 17 kurzfristig so erhitzt wird, daß sie durchschmilzt und damit den Sternpunkt 20 auftrennt. Zur Aufheizung der Schmelzsicherung 22 wird eine Heizwendel 24 verwendet, die über einen von der Steuereinheit 17 gesteuerten Leistungsschalter an der Gleichspannungsquelle 10 angeschlossen ist.

Die Ankerwicklung 12 des Synchronmotors kann selbstverständlich auch beispielsweise in Dreieck geschaltet sein, wie dies in Fig. 2 im Schaltbild dargestellt ist. Die Wicklungsphasen 13 sind dabei mit den Wicklungsanschlüssen 1, 2 und 3 verbunden. Die Trennmittel zum Auftrennen der Wicklungsphasen 13 im Fehlerfall sind in den Wicklungsphasen 13 integriert und mit diesen in Reihe geschaltet. Im Ausführungsbeispiel der Fig. 2 bewirken die Trennmittel bei ihrem Ansprechen eine reversible Auftrennung der Ankerwicklung 12. Hierzu ist zwischen den Micklungsanschlüssen 1, 2 und 3 und den Wicklungsphasen 13 jeweils ein elektrischer Schaltkontakt 23 angeordnet, der elektronisch oder mechanisch steuerbar ist. Elektronisch steuerbare Schaltkontakte 23 werden beispielsweise durch Transistoren oder Thyristoren realisiert, mechanisch steuerbare Schaltkontakte 23 können beispielsweise als elektromagnetisches Relais ausgeführt werden.

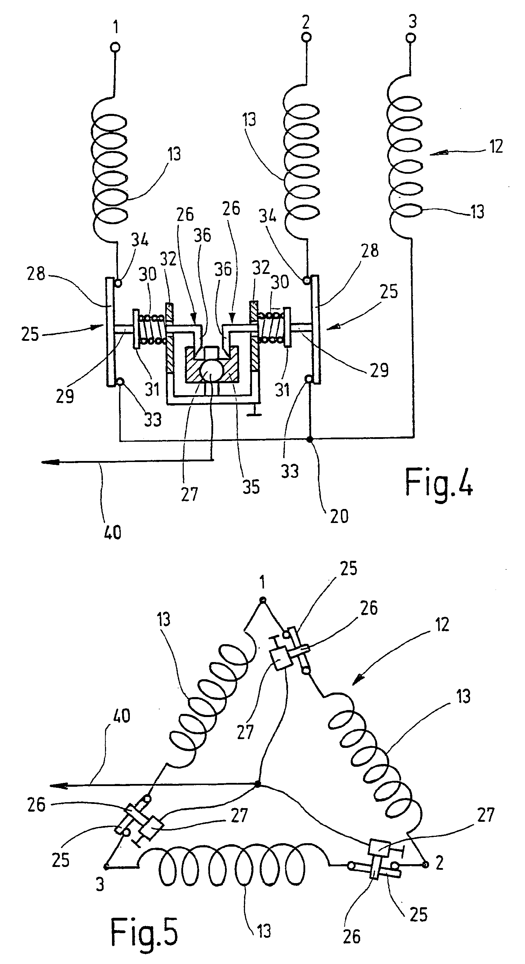

Im Ausführungsbeispiel der Fig. 4 sind wie bei dem Ausführungsbeispiel gemäß Fig. 1 die Trennmittel am Sternpunkt 20 der Ankerwicklung 12 angeordnet und bewirken bei ihrem Aktivieren ein irreversibles Auftrennen des Sternpunktes 20. Die Trennmittel wiesen zwei in Öffnungsrichtung vorgespannte Schaltkontakte 25 auf, die jeweils von einem Halteglied 26 in Schließstellung festgelegt sind. Jeweils ein Schaltkontakt 25 mit Halteglied 26 ist zwischen dem Sternpunkt 20 und dem Wicklungsende zweier Wicklungsphasen 13 angeordnet. Das Vorsehen eines dritten Schaltkontaktes mit Halteglied zwischen Sternpunkt 20 und der dritten Wicklungsphase 13 ist nicht erforderlich. Den beiden Haltegliedern 26 ist eine gemeinsame, elektronisch zündbare, pyrotechnische Sprengkapsel 27 zugeordnet, die so ausgelegt ist, daß sie bei Auslösung beide Halteglieder 26 zu zerstören vermag. Wie beim Ausführungsbeispiel der Fig. 1 ist die Sprengkapsel 27 über die Verbindungsleitung 40 mit der Steuereinheit 17 verbunden, die im Fehlerfall einen elektrischen Zündimpuls an die Sprengkapsel 27 legt. Mit Zerstörung der Halteglieder 26 werden die vorgespannten Schaltkontakte 25 freigegeben, und diese öffnen, so daß die Verbindung der beiden Wicklungsphasen 13 zum Sternpunkt 20 schlagartig unterbrochen wird.

In Fig. 4 ist ein konstruktives Ausführungsbeispiel für die beiden in Öffnungsrichtung vorgespannten Schaltkontakte 25 mit Halteglied 26 und gemeinsamer Sprengkapsel 27 für die Halteglieder 26 schematisch dargestellt. Jeder Schaltkontakt 25 besitzt eine Kontaktplatte 28, die mit einem Betätigungsstift 29 fest verbunden ist. Der axial verschiebbare Bestätigungsstift 29 wird von einer Druckfeder 30 belastet, die sich einerseits an einem mit dem Betätigungsstift 29 verbundenen Federteller 31 und an einem raumfesten Anschlag 32 abstützt und den Betätigungsstift 29 so vorspannt, daß die Kontaktplatte 28 von den Kontaktpunkten 33, 34 abhebt. Die beiden Halteglieder 26 weisen einen gemeinsamen Verriegelungsblock 35 auf, in denen die beiden Betätigungsstifte 29 mit jeweils einer an ihrem von der Kontaktplatte 28 wegweisenden Ende ausgebildeten Verriegelungsnase 36 eingreifen. Innerhalb des Verriegelungsblocks 35 ist die Sprengkapsel 27 angeordnet, die bei ihrer Zündung den Verriegelungblock 35 zerstört. Bei der Montage werden die Schaltkontakte 25 geschlossen, indem die Kontaktplatte 28 unter Spannen der Druckfedern 30 auf die Kontaktpunkte 33, 34 aufgedrückt wird, wobei die Verriegelungsnase 36 in den Verriegelungsblock 35 einfallen und dort gehalten sind. Im Fehlerfall wird von der Steuereinheit 17 die Sprengkapsel 27 gezündet. Diese zerstört den Verriegelungsblock 35, so daß die Betätigungsstifte 29 freigegeben werden und die vorgespannten Druckfedern 30 die Kontaktplatten 28 von den Kontaktpunkten 33, 34 abheben.

Bei dem Ausführungsbeispiel gemäß Fig. 5 ist wie bei dem Ausführungsbeispiel gemäß Fig. 2 die Ankerwicklung 12 in Dreieck geschaltet. Hier ist es erforderlich, daß im Fehlerfall jeder Zweig der Dreieckschaltung aufgetrennt wird, so daß ein Schaltkontakt 25 mit Halteglied 26 mit jeder Wicklungsphase 13 in Reihe geschaltet ist. Im Ausführungsbeispiel der Fig. 5 ist jedem Halteglied 26 eine separate Sprengkapsel 27 zugeordnet, die bei ihrem Auslösen das Halteglied 26 zerstört, so daß der in Schließstellung vorgespannte Schaltkontakt 25 selbsttätig öffnet. Selbstverständlich ist es auch möglich, zur Zerstörung aller drei Halteglieder 26 eine gemeinsame Sprengkapsel 27 zu verwenden. Die vorgespannten Schaltkontakte 25 mit Halteglied 26 können wie zu Fig. 4 beschrieben ausgeführt werden. Bei Ausbildung der Schaltkontakte 25 als vorgespannte Federzungen kann auf die separaten Druckfedern 30 zum Öffnen der Schaltkontakte 25 verzichtet werden.

## Patentansprüche

1. Bürstenloser Gleichstromantrieb mit einem eine mehrphasige Ankerwicklung (12) aufweisenden Synchronmotor, mit einer der Ankerwicklung (12) vorgeschalteten, von einem elektronischen Steuergerät (16) gesteuerten, Halbleiterschalter (15) in Brückenschaltung aufweisenden Schaltvorrichtung (11) zum Kommutieren der Ankerwicklung (12) und mit einer Einrichtung zum Erzeugen eines Fail-Silent-Verhaltens, wobei die Einrichtung im Fehlerfall ansprechende Trennmittel aufweist, die die Verbindungen zwischen den Wicklungsphasen (13) der Ankerwicklung (12) auftrennen, und wobei die Trennmittel durch eine den Fehlerfall erkennende Steuereinheit (17) aktivierbar sind, **dadurch gekennzeichnet, dass** die Steuereinheit (17) in jeder Verbindungsleitung (14) zwischen Schaltvorrichtung (11) und Ankerwicklung (12) angeordnete Messshunts (18) aufweist und in gleichzeitigen Sperrphasen aller Halbleiterschalter (15) die über die Messshunts (18) fließenden Ströme misst und bei Auftreten eines signifikant von Null abweichenden Stromwerts in mindestens einem der Messshunts (18) ein Aktivierungssignal an die Trennmittel ausgibt.

2. Gleichstromantrieb nach Anspruch 1, **dadurch gekennzeichnet, daß** die Trennmittel so ausgebildet sind, daß sie eine irreversible Auftrennung bewirken.

3. Gleichstromantrieb nach Ansprüche 2, dadurch gekenntzeichnet, daß die Trennmittel mindestens eine von der Steuereinheit (17) auslösbare pyrotechnische Sprengkapsel (19) aufweisen.

4. Gleichstromantrieb nach Anspruch 3, **dadurch gekennzeichnet, daß** die Ankerwicklung (12) in Stern geschaltet ist und die pyrotechnische Sprengkapsel (19) am Sternpunkt (20) so angeordnet ist, daß sie den Sternpunkt (20) aufzureißen vermag.

5. Gleichstromantrieb nach Anspruch 3, **dadurch gekennzeichnet, daß** die Trennmittel in Öffnungsrichtung vorgespannte Schaltkontakte (25) und jeweils einen der Schaltkontakte (25) in deren Schließstellung festlegende Halteglieder (26) aufweisen und daß die mindestens eine Sprengkapsel (27) so angeordnet ist, daß sie die Halteglieder (26) zu zerstören oder lösen vermag.

6. Gleichstromantrieb nach Anspruch 5, dadurch gekenntzeichnet, daß die Ankerwicklung (12) in Stern geschaltet und zwischen dem Sternpunkt (20) und dem Wicklungsende von mindestens zwei Wicklungsphasen (13) jeweils ein Schaltkontakt (25) mit Halteglied (26) angeordnet ist und daß den beiden Haltegliedern (26) eine gemeinsame Sprengkapsel (27) zugeordnet ist.

7. Gleichstromantrieb nach Anspruch 5 **dadurch gekennzeichnet, daß** die Ankerwicklung (12) in Dreieck geschaltet ist und ein Schaltkontakt (25) mit Halteglied (26) mit jeder Wicklungsphase (13) in Reihe geschaltet ist und daß jedem Halteglied (26) eine pyrotechnische Sprengkapsel (27) oder allen Haltegliedern (26) eine gemeinsame Sprengkapsel (27) zugeordnet ist.

8. Gleichstromantrieb nach Anspruch 2, **dadurch gekennzeichnet, daß** die Trennmittel mindestens eine von der Steuereinheit (17) ansteuerbare Schmelzsicherung (22) aufweisen.

9. Gleichstromantrieb nach Anspruch 1, **dadurch gekennzeichnet, daß** die Trennmittel so ausgebildet sind, daß sie eine reversible Auftrennung bewirken.

10. Gleichstromantrieb nach Anspruch 9, **dadurch gekennzeichnet, daß** die Trennmittel in den Wicklungsphasen (13) angeordnete elektrische Schaltkontakte (23) aufweisen, die elektronisch oder mechanisch steuerbar sind.

11. Gleichstromantrieb nach einem der Ansprüche 8-10, **dadurch gekennzeichnet, daß** die Ankerwicklung (12) in Stern geschaltet ist und die Trennmittel im Sternpunkt (20) angeordnet sind.

12. Gleichstromantrieb nach einem der Ansprüche 8-10, **dadurch gekennzeichnet, daß** die Ankerwicklung (12) in Dreieck geschaltet ist und die Trennmittel mit jeder Wicklungsphase (13) in Reihe geschaltet sind.

13. Bürstenloser Gleichstromantrieb mit einem eine mehrphasige Ankerwicklung (12) aufweisenden Synchronmotor, mit einer der Ankerwicklung (12) vorgeschalteten, von einem elektronischen Steuergerät (16) gesteuerten, Halbleiterschalter (15) in Brückenschaltung aufweisenden Schaltvorrichtung (11) zum Kommutieren der Ankerwicklung (12) und mit einer Einrichtung zum Erzeugen eines Fail-Silent-Verhaltens, wobei die Einrichtung im Fehlerfall ansprechende Trennmittel aufweist, die die Verbindungen zwischen den Wicklungsphasen (13) der Ankerwicklung (12) auftrennen, und wobei die Trennmittel durch eine den Fehlerfall erkennende Steuereinheit (17) aktivierbar sind, **dadurch gekennzeichnet, dass** die den Fehlerfall erkennende Steuereinheit (17) Meßshunts (21) aufweist, die jeweils eine Wicklungsphase (13) der Ankerwicklung (12) mit dem Sternpunkt (20) verbinden, und daß die Steuereinheit (17) fortlaufend die Shuntströme nach Betrag und Phase mißt und vektoriell addiert und bei signifikantem Abweichen der Vektorsumme von Null ein Aktivierungssignal an die Trennmittel gibt.

## Claims

1. Brushless DC drive with a synchronous motor having a polyphase armature winding (12), with a switching apparatus (11), which is connected upstream of the armature winding (12), is controlled by an electronic control device (16) and has semiconductor switches (15) in a bridge circuit, for commutation of the armature winding (12) and with a device for producing a fail-silent response, the device having disconnecting means which respond in the event of a fault and which disconnect the connections between the winding phases (13) of the armature winding (12), and the disconnection means being activatable by a control unit (17) identifying the fault case, **characterized in that** the control unit (17) has measurement shunts (18) arranged in each connecting line (14) between the switching apparatus (11) and the armature winding (12) and measures the currents flowing via the measurement shunts (18) in simultaneous off phases of all of the semiconductor switches (18) and, in the event of the occurrence of a current value which significantly deviates from zero in at least one of the measurement shunts (15), outputs an activation signal to the disconnection means.

2. DC drive according to Claim 1, **characterized in that** the disconnection means are designed in such a way that they effect irreversible disconnection.

3. DC drive according to Claim 2, **characterized in that** the disconnection means have at least one pyrotechnic blasting cap (19), which can be triggered by the control unit (17).

4. DC drive according to Claim 3, **characterized in that** the armature winding (12) is star-connected, and the pyrotechnic blasting cap (19) is arranged at the neutral point (20) such that it is able to tear open the neutral point (20).

5. DC drive according to Claim 3, **characterized in that** the disconnection means have normally open switching contacts (25) and in each case one holding element (26) which fixes the switching contacts (25) in their closed position, and **in that** the at least one blasting cap (27) is arranged in such a way that it is capable of destroying or loosening the holding elements (26).

6. DC drive according to Claim 5, **characterized in that** the armature winding (12) is star-connected and in each case one switching contact (25) with a holding element (26) is arranged between the neutral point (20) and the end winding of at least two winding phases (13), and **in that** a common blasting cap (27) is associated with the two holding elements (26).

7. DC drive according to Claim 5, **characterized in that** the armature winding (12) is delta-connected, and a switching contact (25) with a holding element (26) is connected in series with each winding phase (13), and **in that** a pyrotechnic blasting cap (27) is associated with each holding element (26) or a common blasting cap (27) is associated with all of the holding elements (26).

8. DC drive according to Claim 2, **characterized in that** the disconnection means have at least one fuse (22) which can be driven by the control unit (17).

9. DC drive according to Claim 1, **characterized in that** the disconnection means are designed in such a way that they effect reversible disconnection.

10. DC drive according to Claim 9, **characterized in that** the disconnection means have electrical switching contacts (23), which are arranged in the winding phases (13) and are electronically or mechanically controllable.

11. DC drive according to one of Claims 8-10, **characterized in that** the armature winding (12) is star-connected, and the disconnection means are arranged at the neutral point (20).

12. DC drive according to one of Claims 8-10, **characterized in that** the armature winding (12) is delta-connected, and the disconnection means are connected in series with each winding phase (13).

13. Brushless DC drive with a synchronous motor having a polyphase armature winding (12), with a switching apparatus (11), which is connected upstream of the armature winding (12), is controlled by an electronic control device (16) and has semiconductor switches (15) in a bridge circuit, for commutation of the armature winding (12) and with a device for producing a fail-silent response, the device having disconnection means which respond in the event of a fault and which disconnect the connections between the winding phases (13) of the armature winding (12), and the disconnection means being activatable by a control unit (17) identifying the fault case, **characterized in that** the control unit (17) identifying the fault case has measurement shunts (21), which each connect a winding phase (13) of the armature winding (12) to the neutral point (20), and **in that** the control unit (17) continuously measures the shunt currents in terms of magnitude and phase and adds them vectorially and, in the event of a significant deviation of the vector sum from zero, gives an activation signal to the disconnection means.

## Revendications

1. Entraînement à courant continu et sans balais, doté d'un moteur synchrone qui présente
un bobinage d'induit (12) polyphasé,
un dispositif de commutation (11) qui commute le bobinage d'induit (12), raccordé en amont du bobinage d'induit (12), commandé par un appareil électronique de commande (16) et présentant des commutateurs (15) à semi-conducteur raccordés en pont et
un dispositif qui induit une réponse d'arrêt en situation de défaut,
le dispositif présentant des moyens de coupure qui réagissent en situation de défaut et qui coupent les liaisons entre les phases (13) du bobinage d'induit (12),
les moyens de coupure pouvant être activés par une unité de commande (17) qui détecte une situation de défaut,
**caractérisé en ce que**
l'unité de commande (17) présente des shunts de mesure (18) disposés dans chaque conducteur de liaison (14) entre le dispositif de commutation (11) et le bobinage d'induit (12), mesure dans les phases de blocage simultané de tous les commutateurs (15) à semi-conducteur le courant qui traverse les shunts de mesure (18) et délivre un signal d'activation au moyen de coupure lorsqu'une valeur de courant qui s'écarte significativement de zéro prévaut dans au moins l'un des shunts de mesure (18).

2. Entraînement à courant continu selon la revendication 1, **caractérisé en ce que** les moyens de coupure sont configurés de manière à opérer une coupure irréversible.

3. Entraînement à courant continu selon la revendication 2, **caractérisé en ce que** les moyens de coupure présentent au moins une capsule pyrotechnique explosive (19) qui peut être déclenchée par l'unité de commande (17).

4. Entraînement à courant continu selon la revendication 3, **caractérisé en ce que** le bobinage d'induit (12) est raccordé en étoile et la capsule pyrotechnique explosive (19) est disposée au centre (20) de l'étoile de manière à pouvoir rompre le centre (20) de l'étoile.

5. Entraînement à courant continu selon la revendication 3, **caractérisé en ce que** les moyens de coupure présentent des contacts de commutation (25) précontraints dans la direction d'ouverture et un organe de maintien (26) qui immobilise les contacts de commutation (25) en leur position de fermeture et **en ce que** la ou les capsules explosives (27) sont disposées de manière à pouvoir détruire ou libérer les organes de maintien (26).

6. Entraînement à courant continu selon la revendication 5, **caractérisé en ce que** le bobinage d'induit (12) est raccordé en étoile, **en ce qu'**un contact de commutation (25) doté d'un organe de maintien (26) est disposé entre le centre (20) de l'étoile et l'extrémité de bobinage d'au moins deux phases (13) du bobinage et **en ce qu'**une capsule explosive (27) commune est associée aux deux organes de maintien (26).

7. Entraînement à courant continu selon la revendication 5, **caractérisé en ce que** le bobinage d'induit (12) est raccordé en triangle, **en ce qu'**un contact de commutation (25) doté d'un organe de maintien (26) est raccordé en série sur chaque phase (13) du bobinage, **en ce qu'**une capsule pyrotechnique explosive (27) est associée à chaque organe de maintien (26) ou **en ce qu'**une capsule explosive (27) commune est associée à tous les organes de maintien (26).

8. Entraînement à courant continu selon la revendication 2, **caractérisé en ce que** les moyens de coupure présentent au moins une protection fusible (22) qui peut être commandée par l'unité de commande (17).

9. Entraînement à courant continu selon la revendication 1, **caractérisé en ce que** les moyens de coupure sont configurés de manière à opérer une coupure réversible.

10. Entraînement à courant continu selon la revendication 9, **caractérisé en ce que** les moyens de coupure présentent des contacts (23) de commutation électrique disposés dans les phases (13) du bobinage et aptes à être commandés électroniquement ou mécaniquement.

11. Entraînement à courant continu selon l'une des revendications 8 à 10, **caractérisé en ce que** le bobinage d'induit (12) est raccordé en étoile et **en ce que** les moyens de coupure sont disposés au centre (20) de l'étoile.

12. Entraînement à courant continu selon l'une des revendications 8 à 10, **caractérisé en ce que** le bobinage d'induit (12) est raccordé en triangle et **en ce que** les moyens de coupure sont raccordés en série sur chaque phase (13) du bobinage.

13. Entraînement à courant continu et sans balais, doté d'un moteur synchrone qui présente
un bobinage d'induit (12) polyphasé,
un dispositif de commutation (11) qui commute le bobinage d'induit (12), raccordé en amont du bobinage d'induit (12), commandé par un appareil électronique de commande (16) et présentant des commutateurs (15) à semi-conducteur raccordés en pont et
un dispositif qui induit une réponse d'arrêt en situation de défaut,
le dispositif présentant des moyens de coupure qui réagissent en situation de défaut et qui coupent les liaisons entre les phases (13) du bobinage d'induit (12),
les moyens de coupure pouvant être activés par une unité de commande (17) qui détecte une situation de défaut,
**caractérisé en ce que**
l'unité de commande (17) qui détecte un cas de défaut présente des shunts de mesure (21) qui relient chacun une phase (13) du bobinage d'induit (12) au centre (20) de l'étoile et **en ce que** l'unité de commande (17) mesure en permanence le niveau et la phase des courants de shunt, les additionne vectoriellement et délivre un signal d'activation aux moyens de coupure lorsque la somme vectorielle s'écarte significativement de zéro.
